Europäisches Patentamt

European Patent Office

Office européen des brevets

(11) Veröffentlichungsnummer: **0 149 031**
**A1**

## (12) EUROPÄISCHE PATENTANMELDUNG

(21) Anmeldenummer: **84112883.8**

(22) Anmeldetag: **25.10.84**

(51) Int. Cl.⁴: **F 16 D 11/00**

(30) Priorität: **27.12.83 DE 3347136**

(43) Veröffentlichungstag der Anmeldung:
**24.07.85 Patentblatt 85/30**

(84) Benannte Vertragsstaaten:
**BE DE FR IT**

(71) Anmelder: **IDEAL-STANDARD GMBH**
**Euskirchener Strasse 80**
**D-5300 Bonn 1(DE)**

(72) Erfinder: **Bergmann, Konrad, Dr.**
**zur Philippsburg 70**
**D-5560 Wittlich(DE)**

(54) **Formschlüssige Verbindung.**

(57) Die Erfindung sieht eine formschlüssige Verbindung zwischen geneigt verlaufenden Kontaktflächen von Bauteilen aus Materialien mit unterschiedlichen Wärme-Dehnungs-, Quell-, Schwindungs- oder Schrumpfungseigenschaften vor, wobei die den jeweiligen Formschluß bewirkenden Kontaktflächen (4,8) auf Strahlen (5) liegen, die alle von einem einzigen ortsfesten Punkt (6) ausgehen.

EP 0 149 031 A1

Formschlüssige Verbindung

Die Erfindung bezieht sich auf eine formschlüssige Verbindung zwischen geneigt verlaufenden Kontaktflächen von Bauteilen aus Materialien mit unterschiedlichen Wärmedehnungs-, Quell-, Schwindungs- oder Schrumpfungseigenschaften.

Es ist bekannt, daß z.B. gesinterte Bauteile in ihren Abmessungen relativ großen, in der Fertigung unvermeidlichen Schwankungen unterliegen in Abhängigkeit von den beim Sintervorgang hervorgerufenen Schrumpfungsprozessen. Bei z.B. $Al_2O_3$ treten in der Massenfertigung Schwankungen von $\pm$ 1% bei allen Abmessungen auf. Ähnliche Erscheinungen kann man auch bei Kunststoffteilen bobachten, was sowohl durch schwankende Prozeßbedingungen als auch durch Schwankungen im Spritzgußmaterial bedingt ist.

Eine formschlüssige Verbindung obengenannter Materialien untereinander oder mit anderen maßgenauen Bauteilen bedingt also große Toleranzfelder mit der Folge, daß im ungünstigen Fall ein unerwünscht großes Spiel zwischen den zusammengefügten Bauteilen auftritt.

Ähnliche Probleme entstehen, wenn Materialien mit sehr unterschiedlichen Wärmedehnungskoeffizienten formschlüssig verbunden werden sollen, weil in diesen Fällen eines der Bauteile seine Abmessungen wesentlich stärker ändert als das andere Bauteil. Je nach Materialkombination und Temperaturschwankung ergibt sich auch in diesem Fall die Notwendigkeit, derartige Formschlußverbindungen mit erhöhtem Spiel auszuführen, um unzulässige Verspannungen der Bauteile zu vermeiden.

In fast allen Anwendungsfällen ist aber Spiel bei einer
formschlüssigen Verbindung unerwünscht, da entweder
funktionelle Nachteile auftreten oder auch Verschleiß
bei wechselsinnig bewegten Teilen.

Der vorliegenden Erfindung liegt die Aufgabe zugrunde,
diese Nachteile zu beseitigen und eine formschlüssige
Verbindung der eingangs genannten Art durch eine besondere
Gestaltung der Verbindung zu schaffen, welche leicht herstellbar und sicher in der Funktion ist.

Erreicht ist dieses Ziel dadurch, daß die den jeweiligen
Formschluß bewirkenden Kontaktflächen auf Strahlen liegen,
die alle von einem einzigen ortsfesten Punkt ausgehen.

Treten bei einer erfindungsgemäßen Formschlußverbindung
Maßänderungen durch wechselnde Sinterschwindung, Schrumpfung,
Quellung, Wärmedehnung od. dgl. auf, so verändern sich
bei den Bauteilen alle Abmessungen um denselben Prozentsatz d.h.
geometrisch gleich wobei aber die Winkel zwischen den den
Formschluß bewirkenden Kontaktflächen unverändert erhalten
bleiben und somit eine unveränderte Paßgenauigkeit zwischen
den Formschlußpartnern sichergestellt ist. Betrachtet man
einen erfindungsgemäß ortsfesten Punkt, von dem alle Strahlen
ausgehen, so bewegen sich bei geometrischen Längenänderungen
alle übrigen Punkte auf diesen Strahlen. Dies hat zur Folge,
daß auch die Flächenpunkte der Kontaktflächen auf den
Strahlen wandern, während die Winkel zwischen den Kontaktflächen unverändert bleiben. Es treten also lediglich
Relativverschiebungen der Kontaktflächen gegeneinander auf.

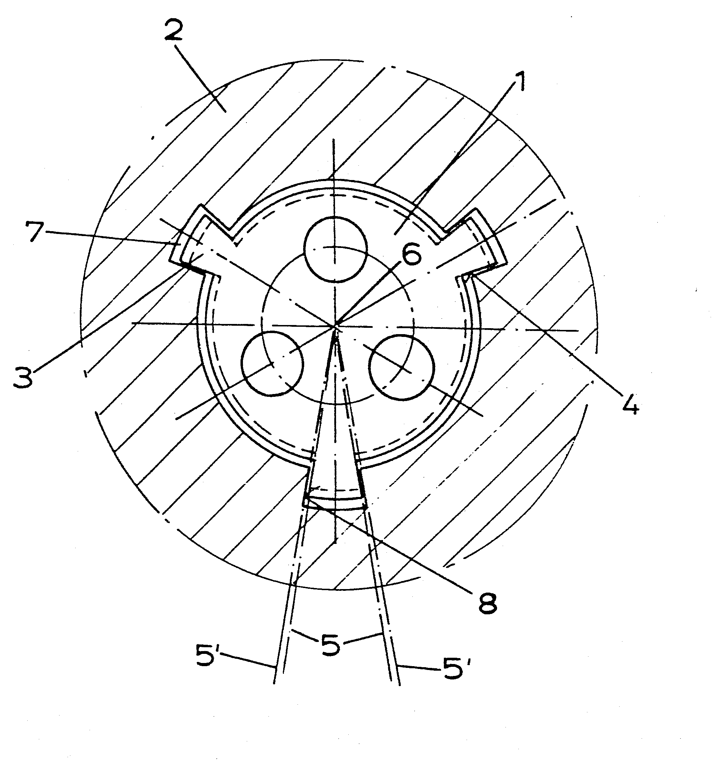

Von besonders positiver Bedeutung ist die Erfindung dann,
wenn die Bauteile durch den Herstellungsprozeß unterschiedliche Schwindungsmaße aufweisen, wie dies z.B. bei der Verbindung von Keramik mit Kunststoffteilen gegeben ist.
Die das ganze Kunststoff-Bauteil betreffenden Schwindungsabweichungen bleiben ohne Auswirkung auf das Verbindungsspiel. Sehr vorteilhaft ist ferner die Tatsache, daß auch
das bekannte Quellen bei Kunststoffen ebenfalls keine
Veränderungen des Verbindungsspiels bewirkt. Zu erwähnen
ist auch die erfindungsgemäß gegebene Möglichkeit, die
Werkstoffe Sintermetall/Keramik miteinander formschlüssig
zu verbinden, die bekanntlich im Fertigungsprozeß *wechselnde Schwindungen* unterliegen. Demnach können nach der Erfindung entsprechende
Bauteile mit engsten Toleranzen zusammengefügt werden ohne
eine Bearbeitung der Sinterteile vornehmen zu müssen. Die
Wahl des ortsfesten Punktes richtet sich nach der Funktion
der Bauteile. In der Zeichnung ist die Erfindung in einem
Ausführungsbeispiel als Drehverbindung dargestellt. Bei
derartigen Verbindungen wird man sinnvollerweise den Drehpunkt als ortsfesten Punkt wählen. Bei der gezeigten Ausführung ist das innere Bauteil 1 mit Nasen 3 versehen, deren
Seitenflächen 4 auf Strahlen 5 liegen, die alle vom Drehpunkt als ortsfesten Punkt 6 ausgehen, welcher hier der
Mittelpunkt ist. Dabei sind die Nasen 3 gegenüber einer
tatsächlichen Konstruktion übertrieben groß dargestellt
zur besseren Erläuterung der Erfindung anhand von praktischen
Maßabweichungen des Bauteils 1 in der Fertigung. Das äußere
Bauteil 2 weist Ausnehmungen 7 am Umfang auf, deren Seitenflächen 8 ebenfalls auf Strahlen 5' liegen. Das innere
Bauteil 1 besteht aus Sinterkeramik, das ohne Oberflächenbearbeitung einbaubar ist und dessen Schwindung um 2%
schwankt. Die ausgezogene Kontur stellt dabei das Maximal-,
die gestrichelte Linie das Minimal-Maß dar. Bei dem gezeigten Bauteil 1 handelt es sich um eine keramische Ventilsitzscheibe eines sanitären Wasserventils. Diese Scheibe
liegt in dem Bauteil 2, welches ein Kartuschengehäuse ist,
das aus Kunststoff besteht.

- 4 -

- Patentanspruch -

Patentanspruch
---

Formschlüssige Verbindung zwischen geneigt verlaufenden Kontaktflächen von Bauteilen aus Materialien mit unterschiedlichen Wärme-Dehnungs-, Quell-, Schwindungs- oder Schrumpfungseigenschaften, d a d u r c h   g e k e n n - z e i c h n e t, daß die den jeweiligen Formschluß bewirkenden Kontaktflächen (4,8) auf Strahlen (5) liegen, die alle von einem einzigen ortsfesten Punkt (6) ausgehen.

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | DE-A-2 052 244 (LIBERECKE AUTOMOBILOVE ZAVODY) * Figur 3 * | 1 | F 16 D 11/00 |
| Y | DE-A-2 402 218 (THE GLEASON WORKS) * Anspruch 1 * | 1 | |
| Y | DD-A- 130 169 (CLARK EQUIPMENT CO.) * Figur 2 * | 1 | |
| Y | BE-A- 649 182 (FERROPLAST TH. BURDELSKI & CO.) * Figur 8 * | 1 | |

RECHERCHIERTE SACHGEBIETE (Int. Cl.4)

F 16 D 11/00
F 16 B 1/00
F 16 B 2/14
F 16 B 4/00
F 16 B 7/00
F 16 B 12/40

Der vorliegende Recherchenbericht wurde für alle Patentansprüche erstellt.

| Recherchenort | Abschlußdatum der Recherche | Prüfer |
|---|---|---|
| BERLIN | 13-03-1985 | ZAPP E |